# EUROPEAN PATENT APPLICATION

(11) **EP 4 718 594 A2**
(43) Date of publication of application: **01.04.2026**
(21) Application number: 25191497.4
(22) Date of filing: 24.07.2025
(51) Int. Cl.: H01M 50/152, H01M 50/159, H01M 50/528, H01M 50/538, H01M 50/627

(54) **SECONDARY BATTERY AND BATTERY PACK**

(30) Priority: 25.09.2024 CN 202411345085
(71) Applicant: AESC Japan Ltd., Yokohama-Shi, Kanagawa 220-0012 (JP)
(72) Inventor: QIAN, Jia, Jiangyin City, Wuxi City, 214443 (CN)
(74) Representative: Becker, Eberhard

(57) **Abstract**

A secondary battery (100), a battery pack (200) and an electronic device (300) are provided. The secondary battery (100) includes: a housing (110) and an electrode assembly (120). The housing (110) includes a side wall (111) with an opening (112) at one end and a cover plate assembly (140). The cover plate assembly (140) seals the opening (112). The electrode assembly (120) is disposed within the housing (110). The cover plate assembly (140) includes: a first cover plate (141) and a second cover plate (142). The first cover plate (141) covers the opening (112) and is connected with the side wall (111) in a sealed manner. The first cover plate (141) includes a through hole (1411). The second cover plate (142) at least partially blocks the through hole (1411). The second cover plate (142) is connected with the first cover plate (141).

## Description

### BACKGROUND

### Technical Field

The present disclosure relates to the battery technology, and specifically relates to a secondary battery, a battery pack, and an electronic device.

### Description of Related Art

Current secondary batteries normally have an end cap disposed at an opening end of a housing to seal the opening. Typical end caps are designed in an integral manner, such as integral stamping structures. When configuring the end cap to mate with other components, it is often required to incorporate various structural features in localized areas of the end cap, such as local recesses, local slots, openings, and so on to satisfy corresponding mating and configuration requirements. However, integral end caps are constrained by forming processes, processing costs, etc. When the integral end caps are formed with different structural features, problems such as difficulty in one-time molding and poor molding precision are encountered. Therefore, there is poor flexibility in end cap design, which would limit structural optimization on the end cap side.

### SUMMARY OF THE DISCLOSURE

The present disclosure provides a secondary battery, a battery pack, and an electronic device to improve the technical problem of poor design flexibility of end caps in current secondary batteries.

To achieve the above objectives and other related objectives, the present disclosure provides a secondary battery, the secondary battery includes: a housing and an electrode assembly. The housing includes a side wall with an opening at one end and a cover plate assembly. The cover plate assembly seals the opening, and the electrode assembly is disposed within the housing. The cover plate assembly includes: a first cover plate and a second cover plate. The first cover plate covers the opening and is connected with the side wall in a sealed manner. The first cover plate includes a through hole. The second cover plate at least partially blocks the through hole. The second cover plate is connected with the first cover plate.

In an embodiment of the secondary battery of the present disclosure, the second cover plate includes a liquid injection hole. The second cover plate is disposed between the first cover plate and the electrode assembly, and the second cover plate and an inner wall of the through hole are matched to form a stepped portion. The cover plate assembly further includes a sealing plate. An outer periphery of the sealing plate matches the stepped portion and is welded with the inner wall of the through hole to seal the liquid injection hole.

In an embodiment of the secondary battery of the present disclosure, the secondary battery further includes a current collector electrically connected with the electrode assembly. The current collector is disposed between the electrode assembly and the second cover plate, and is welded with the second cover plate to form a first weld mark. The sealing plate covers and seals the first weld mark.

In an embodiment of the secondary battery of the present disclosure, the first cover plate further includes a first protrusion and a cover portion surrounding an outer periphery of the first protrusion. The first protrusion protrudes toward the side where the second cover plate is located relative to the cover portion. The through hole penetrates through the first protrusion. One side of the first protrusion facing the electrode assembly is welded with the second cover plate.

In an embodiment of the secondary battery of the present disclosure, one side of the first protrusion facing away from the electrode assembly includes a first recess. The sealing plate is welded with the inner wall of the through hole to form a second weld mark. The second weld mark is accommodated within the first recess, and a top of the second weld mark does not extend beyond an outer surface of the cover portion facing away from the electrode assembly.

In an embodiment of the secondary battery of the present disclosure, the secondary battery further includes the current collector. The current collector is disposed on one side of the electrode assembly facing the cover plate assembly and is electrically connected with the electrode assembly. An outer periphery of the first cover plate is welded with the side wall. At least a partial area of the current collector is exposed from the through hole. An area where the second cover plate blocks the through hole is at least partially welded with the current collector.

In an embodiment of the secondary battery of the present disclosure, the second cover plate is disposed on one side of the first cover plate facing away from the electrode assembly. An outer edge of the second cover plate contacts and is welded with the first cover plate.

In an embodiment of the secondary battery of the present disclosure, the second cover plate is welded with the current collector to form the first weld mark. The first weld mark passes through the second cover plate and enters the interior of the current collector without extending beyond a surface of the current collector facing the electrode assembly. The second cover plate is welded with the first cover plate to form a third weld mark. The third weld mark passes through the second cover plate and enters the interior of the first cover plate without extending beyond a surface of the first cover plate facing the electrode assembly.

In an embodiment of the secondary battery of the present disclosure, the first cover plate includes a second recess and a cover portion surrounding an outer periphery of the second recess. The second recess is recessed toward the side where the electrode assembly is located relative to the cover portion. The second recess includes a bottom wall. The through hole penetrates through the bottom wall. The second cover plate is accommodated in the second recess and is welded with the bottom wall.

In an embodiment of the secondary battery of the present disclosure, a melting point of the second cover plate is greater than a melting point of the current collector and is less than a melting point of the first cover plate.

In an embodiment of the secondary battery of the present disclosure, a material of the second cover plate is one of nickel, carbon steel, iron, copper, copper-nickel alloy, or iron-nickel alloy.

In an embodiment of the secondary battery of the present disclosure, a thickness of the second cover plate is less than a thickness of the first cover plate.

In an embodiment of the secondary battery of the present disclosure, along an axial direction of the secondary battery, the current collector includes a current collector body and a thickening portion having a thickness greater than that of the current collector body. The thickening portion protrudes toward the side where the second cover plate is located relative to the current collector body and contacts and is welded with the second cover plate.

In an embodiment of the secondary battery of the present disclosure, the thickness of the second cover plate is less than a thickness of the thickening portion.

In an embodiment of the secondary battery of the present disclosure, a ratio of an inner diameter of the through hole to an outer diameter of the first cover plate is less than or equal to 0.5.

In an embodiment of the secondary battery of the present disclosure, the secondary battery further includes the current collector. The current collector is disposed on one side of the electrode assembly facing the cover plate assembly and is electrically connected with the electrode assembly to form a fourth weld mark. Along the axial direction of the secondary battery, an orthogonal projection of the first cover plate at least partially covers the fourth weld mark.

In an embodiment of the secondary battery of the present disclosure, the cover plate assembly further includes an explosion-proof notch. The explosion-proof notch is disposed on the first cover plate.

The present disclosure further provides a battery pack. The battery pack includes the secondary battery described in any one of the above embodiments.

The present disclosure further provides an electronic device. The electronic device includes the battery pack described above.

In the secondary battery, the battery assembly and the electronic device provided in the present disclosure, the cover plate assembly of the secondary battery includes the first cover plate and the second cover plate disposed separately. The first cover plate and the second cover plate may each be individually formed and then fixed together. Compared with the integrated end cap, the design of the present disclosure may achieve an optimized layout of multiple local feature structures on the cover plate assembly by adjusting a connection positional relationship between the first cover plate and the second cover plate, thereby making it easy to form local features. Also, since the first cover plate and the second cover plate are disposed as separate structures, the first cover plate and the second cover plate may also adopt different materials or have different material thicknesses according to actual welding requirements and strength requirements. Therefore, compared with the integrated end cap, the separate design of the cover plate assembly in the present disclosure has a better flexibility and is easier to achieve structural optimization of the secondary battery on the end cap side.

### BRIEF DESCRIPTION OF THE DRAWINGS

In order to more clearly illustrate the technical solutions in the embodiments of the present disclosure or the related art, the drawings required for use in the description of the embodiments or the related art will be briefly introduced below. Clearly, the drawings in the following description are merely some embodiments of the present disclosure. For those of ordinary skill in the art, other embodiments may also be obtained according to these drawings without creative effort.
FIG. 1 is a cross-sectional view of an overall structure of an embodiment of the secondary battery of the present disclosure.
FIG. 2 is a partial enlarged view of an area A in FIG. 1.
FIG. 3 is a partial enlarged view of mounting positions of a first cover plate and a second cover plate in an embodiment of the secondary battery of the present disclosure.
FIG. 4 is a schematic view of a three-dimensional structure of the first cover plate in an embodiment of the secondary battery of the present disclosure.
FIG. 5 is a partial cross-sectional view of the first cover plate in an embodiment of the secondary battery of the present disclosure.
FIG. 6 is a schematic view of a cover plate assembly in an embodiment of the secondary battery of the present disclosure.
FIG. 7 is a cross-sectional view of the cover plate assembly in an embodiment of the secondary battery of the present disclosure.
FIG. 8 is a schematic view of the mounting positions of the first cover plate and the second cover plate in an embodiment of the secondary battery of the present disclosure.
FIG. 9 is a schematic view of welding positions of the first cover plate and the second cover plate in another embodiment of the secondary battery of the present disclosure.
FIG. 10 is a structural view of a thickening portion and the second cover plate in an embodiment of the secondary battery of the present disclosure.
FIG. 11 is a partial enlarged view of mounting positions of the thickening portion and the second cover plate in an embodiment of the secondary battery of the present disclosure.
FIG. 12 is a schematic view of an overall structure of an embodiment of a battery pack of the present disclosure.
FIG. 13 is a structural view of the battery pack of the present disclosure mounted on a vehicle.

### DESCRIPTION OF THE EMBODIMENTS

The following describes the implementation of the present disclosure through specific embodiments, and those skilled in the art can easily understand other advantages and effects of the present disclosure from the content disclosed in this specification. The present disclosure may also be implemented or applied through other different specific embodiments, and various details in this specification may also be modified or changed based on different viewpoints and applications without departing from the spirit of the present disclosure. It should be noted that, in the case of no conflict, the following embodiments and features in the embodiments may be combined with each other. It should also be understood that the terms used in the embodiments of the present disclosure are for describing specific implementations, rather than for limiting the scope to be protected by the present disclosure. Test methods without specific conditions noted in the following embodiments are generally conducted according to conventional conditions or according to conditions suggested by respective manufacturers.

When numerical ranges are provided in embodiments, it should be understood that, unless otherwise specified in the present disclosure, both endpoints of each numerical range and any numerical value between the two endpoints may be adopted. Unless otherwise defined, all technical and scientific terms used in the present disclosure have the same meaning as commonly understood by one of ordinary skill in the art to which this disclosure pertains. In addition to the technical knowledge possessed by those skilled in the art regarding the related art and the description of the present disclosure, any methods, device, and materials of the related art that are similar or equivalent to those described in the embodiments of the present disclosure may be used to implement the present disclosure.

It should be noted that terms such as "upper", "lower", "left", "right", "middle", and "one" cited in this specification are only for the clarity of description and are not used to limit the scope in which the present disclosure may be implemented. Changes or adjustments to their relative relationships, without substantial changes to the technical content, should also be regarded as the scope in which the present disclosure may be implemented.

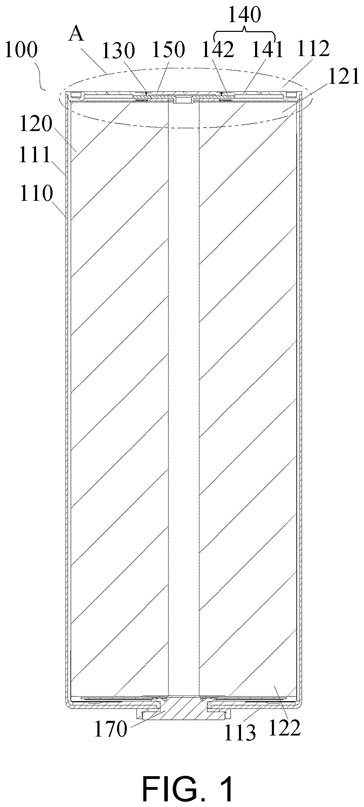

Please refer to FIG. 1 to FIG. 13. The present disclosure provides a secondary battery 100, a battery pack 200, and an electronic device 300. A cover plate assembly 140 of the secondary battery 100 includes a first cover plate 141 and a second cover plate 142. The second cover plate 142 is fixedly connected to the first cover plate 141, thereby enabling the cover plate assembly 140 to be separated. Compared to an integrated end cap, the design of the present disclosure may improve the design flexibility of the cover plate assembly 140.

In the present disclosure, the secondary battery 100 may include a lithium-ion battery, a lithium-sulfur battery, a sodium lithium-ion battery, a sodium-ion battery, or a magnesium-ion battery, and so on, and the embodiments of the present disclosure are not limited thereto. The secondary battery 100 may be columnar, flat, rectangular or in other shapes, which is not limited in the embodiments of the present disclosure.

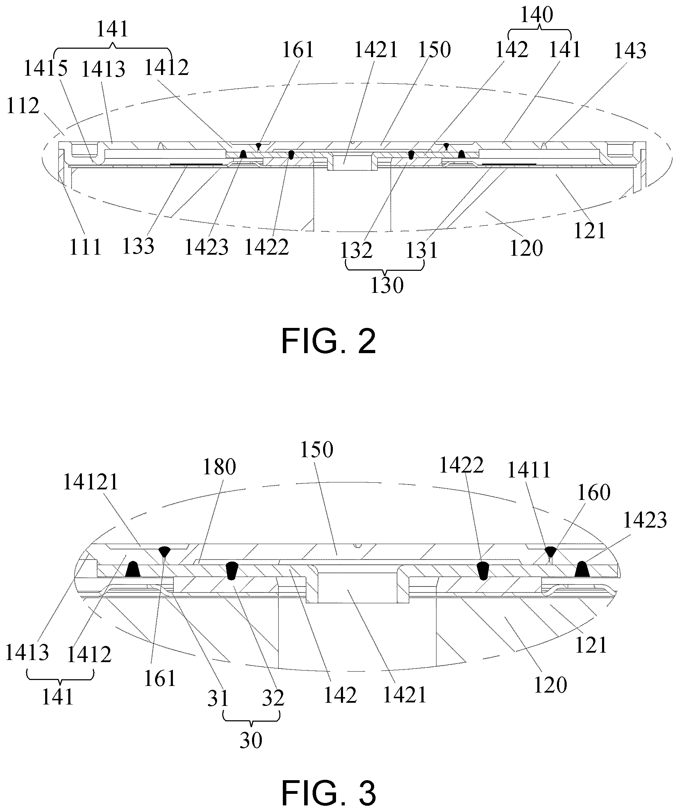

Please refer to FIG. 1 and FIG. 2, the structure of the secondary battery 100 is further described. The secondary battery 100 includes: a housing 110 and an electrode assembly 120.

A mounting chamber is formed inside the housing 110 for mounting the electrode assembly 120, an electrolyte (not shown), and other components. Specifically, the dimensions of the housing 110 may be determined according to the specific dimensions of the electrode assembly 120, for example, with a diameter of 46mm and heights of 80mm, 95mm, 120mm, and other specifications. The housing 110 may be in various shapes, such as columnar, prismatic, etc. The housing 110 may also be made of a variety of materials, for example, copper, iron, aluminum, steel, aluminum alloy, etc. To prevent the housing 110 from rusting during long-term use, a layer of anti-rust material, such as metallic nickel, may also be plated on a surface of the housing 110.

Please refer to FIG. 1 and FIG. 2, in an embodiment of the secondary battery 100 of the present disclosure, the housing 110 is a columnar structure. The housing 110 includes an end wall 113, a side wall 111 surrounding the end wall 113, and the cover plate assembly 140. Along a height direction of the housing 110, one end of the side wall 111 is fixed to the end wall 113 to form a closed end, and the other end of the side wall 111 is provided with an opening 112. The cover plate assembly 140 is disposed at the opening 112 and seals the opening 112.

As shown in FIG. 1 and FIG. 2, the electrode assembly 120 is accommodated within the housing 110. The electrode assembly 120 is a component where electrochemical reactions occur in the secondary battery 100. The electrode assembly 120 is formed mainly by winding or stacking positive electrode sheets and negative electrode sheets, and a separator is normally disposed between the positive electrode sheets and the negative electrode sheets. Preferably, in this embodiment, the electrode assembly 120 is formed by winding the positive electrode sheets, the negative electrode sheets, and the separators. The positive electrode sheet includes a positive electrode current collector and a positive electrode active substance layer. The positive electrode active substance layer is coated on a surface of the positive electrode current collector. The positive electrode current collector includes a positive electrode coated area and a positive electrode tab connected to the positive electrode coated area. The positive electrode coated area is coated with the positive electrode active substance layer, and the positive electrode tab is not coated with the positive electrode active substance layer. The negative electrode sheet includes a negative electrode current collector and a negative electrode active substance layer. The negative electrode active substance layer is coated on a surface of the negative electrode current collector. The negative electrode current collector includes a negative electrode coated area and a negative electrode tab connected to the negative electrode coated area. The negative electrode coated area is coated with the negative electrode active substance layer, and the negative electrode tab is not coated with the negative electrode active substance layer. Taking a lithium-ion battery as an example, the material of the positive electrode current collector may be aluminum. The positive electrode active substance layer includes positive electrode active substance, and the positive electrode active substance may be lithium cobalt oxide, lithium iron phosphate, ternary lithium, or lithium manganese oxide, etc. The material of the negative electrode current collector may be copper. The negative electrode active substance layer includes negative electrode active substance, and the negative electrode active substance may be carbon or silicon, etc. A main base material of the separator may be PP or PE, etc. To protect and insulate the electrode assembly 120, an insulating film may also be used to wrap the exterior of the electrode assembly 120, and the insulating film may be synthesized from PP, PE, PET, PVC, or other polymer materials.

Please continue to refer to FIG. 1 and FIG. 2, in an embodiment of the secondary battery 100 of the present disclosure, the electrode assembly 120 is mounted within the housing 110 in a sealed manner. The electrode assembly 120 is provided with a first tab 121 and a second tab 122 respectively at both ends in a height direction of the secondary battery 100, and the first tab 121 and the second tab 122 have opposite polarities, wherein the first tab 121 faces the opening 112 of the housing 110, and the first tab 121 is a negative electrode tab. It should be noted that in other embodiments, the first tab 121 may also be a positive electrode tab, and the second tab 122 may be a negative electrode tab.

Please refer to FIG. 1, in an embodiment of the secondary battery 100 of the present disclosure, a through terminal mounting hole is opened on the end wall 113 of the housing 110, and an electrode terminal 170 passes through the terminal mounting hole in a sealed and insulated manner. As long as the electrode terminal 170 and the end wall 113 are sealed and insulated, there is no limitation to the method of mounting the electrode terminal 170 on the end wall 113. The second tab 122 is disposed on one side of the electrode assembly 120 facing the end wall 113. One end of the electrode terminal 170 may be directly welded to the second tab 122, or may be electrically connected to the second tab 122 through a current collector, which is not specifically limited herein.

Please refer to FIG. 1 and FIG. 2, in an embodiment of the secondary battery 100 of the present disclosure, a current collector 130 is disposed within the housing 110 and positioned on one side of the electrode assembly 120 facing the cover plate assembly 140. The current collector 130 is welded to the first tab 121 and the housing 110 respectively to achieve electrical connection. The current collector 130 may be welded to the cover plate assembly 140, or may be welded to the side wall 111, or may be welded to both the cover plate assembly 140 and the side wall 111. There is no limitation to the specific position and welding area where the current collector 130 is welded to the first tab 121, as long as stable electrical connection requirements between the current collector 130 and the first tab 121 can be met.

It should be noted that in some other embodiments, the current collector 130 may not be disposed between the cover plate assembly 140 and the electrode assembly 120. The cover plate assembly 140 is directly welded to the first tab 121 on the electrode assembly 120 and simultaneously welded to the side wall 111, thereby achieving electrical connection between the electrode assembly 120 and the housing 110.

Please refer to FIG. 2 to FIG. 5, the cover plate assembly 140 includes the first cover plate 141 and the second cover plate 142. The first cover plate 141 covers the opening 112, and an outer edge of the first cover plate 141 is connected to the side wall 111 of the housing 110 in a sealed manner. The above sealing connection may be performed through multiple sealing methods, such as welding seal, mechanical crimping seal, etc. The first cover plate 141 includes a through hole 1411. The through hole 1411 may be positioned in a center area of the first cover plate 141, or may be deviated from the center area. The through hole 1411 may also be designed in various shapes, for example a square hole, a circular hole, or other irregular holes, etc. Preferably, for ease of processing and positioning the through hole 1411 on the first cover plate 141, in the present embodiment, the through hole 1411 is a circular hole structure, and the through hole 1411 is coaxially disposed with the first cover plate 141.

Please refer to FIG. 3, FIG. 6, and FIG. 7, the second cover plate 142 is disposed on one side of the current collector 130 away from the electrode assembly 120, and the second cover plate 142 at least partially blocks the through hole 1411. The second cover plate 142 is connected to the first cover plate 141, and they may be connected through welding connection, riveting connection, or any method that can achieve electrical connection between the first cover plate 141 and the second cover plate 142.

Please refer to FIG. 2, FIG. 6, and FIG. 7, preferably, in the present embodiment, the first cover plate 141 and the second cover plate 142 are welded. The second cover plate 142 may be a disc shape matching the through hole 1411, or may be other shapes, such as a rectangular plate, a polygonal plate, and so on that can at least partially block the through hole 1411. Preferably, in the present embodiment, the second cover plate 142 is an approximately disc-shaped structure and is coaxially disposed with the through hole 1411. Such design may make it easy for positioning and mounting the second cover plate 142 relative to the first cover plate 141, which helps to improve assembly efficiency between the second cover plate 142 and the first cover plate 141.

The mounting positions of the second cover plate 142 and the first cover plate 141 may vary according to different design requirements. For example, the second cover plate 142 may be mounted on one side of the first cover plate 141 away from the electrode assembly 120, so as to form an accommodating chamber feature opening on the cover plate assembly 140 in a direction facing the electrode assembly 120 side. In this way, some of the features of the current collector 130 may be accommodated in an axial direction, facilitating welding between the current collector 130 and the second cover plate 142. The second cover plate 142 may also be mounted on one side of the first cover plate 141 facing the electrode assembly 120, so as to form a step feature on the cover plate assembly 140 in a direction facing an outer side of the cover plate assembly 140, thereby making it easy to form a mating positioning relationship with components connected to the outside of the cover plate assembly 140. The material of the first cover plate 141 and the material of the second cover plate 142 may be selected from different materials according to the welding requirements and connection strength at their respective positions. For example, when the second cover plate 142 needs to be welded with both the first cover plate 141 and the current collector 130, the second cover plate 142 may be made of a material with a melting point between a melting point of the first cover plate 141 and a melting point of the current collector 130. In this way, it is possible to ensure the welding quality of the first cover plate 141 and the second cover plate 142, and also balance the welding quality of the second cover plate 142 and the current collector 130. A thickness of the first cover plate 141 and a thickness of the second cover plate 142 may be designed as different thicknesses to adapt to different strength and welding requirements at their respective connection positions. For example, since the first cover plate 141 needs to bear a greater strength and pressure, the first cover plate 141 needs to be designed with a greater thickness. When the second cover plate 142 needs to be welded with the current collector 130 underneath, in order to weld through the second cover plate 142, a smaller thickness may be adopted for the second cover plate 142.

Since the cover plate assembly 140 in the present embodiment includes the first cover plate 141 and the second cover plate 142 disposed separately, the first cover plate 141 and the second cover plate 142 may each be individually formed and then fixed together. Compared with integrated end cap, the design of the present disclosure may achieve an optimized layout of multiple local feature structures on the cover plate assembly 140 by adjusting a connection positional relationship between the first cover plate 141 and the second cover plate 142, thereby making it easy to form local features. Also, since the first cover plate 141 and the second cover plate 142 are disposed as separate structures, the first cover plate 141 and the second cover plate 142 may also adopt different materials or have different material thicknesses according to actual welding requirements and strength requirements. Therefore, compared with the integrated end cap, the separate design of the cover plate assembly 140 in the present embodiment has a better flexibility and is easier to achieve structural optimization of the secondary battery 100 on the end cap side.

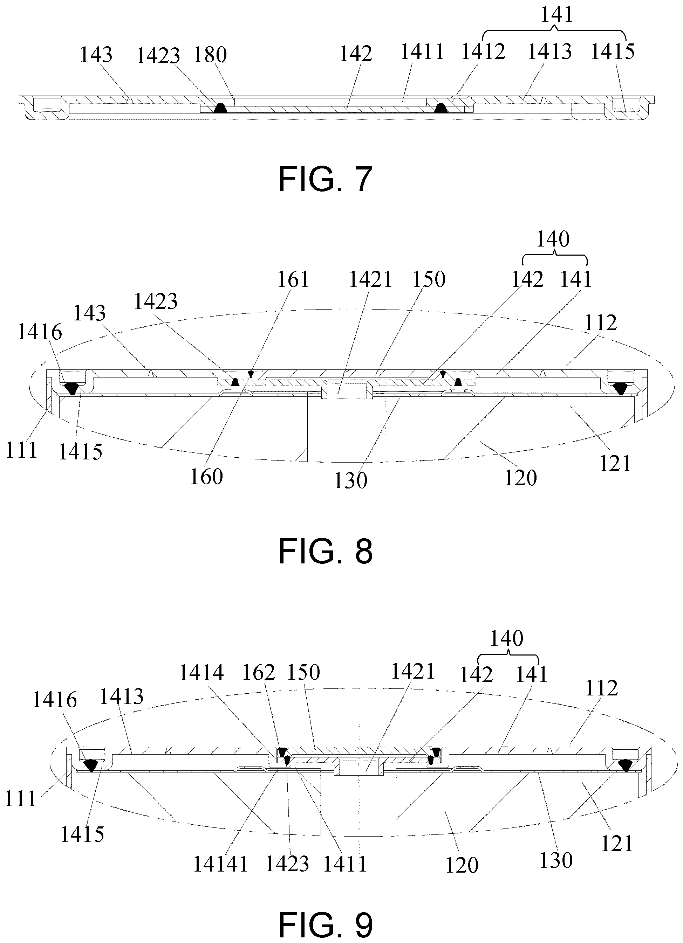

Please refer to FIG. 2, FIG. 3, and FIG. 7, in an embodiment of the secondary battery 100 of the present disclosure, the second cover plate 142 includes a liquid injection hole 1421. The liquid injection hole 1421 may be positioned in the center area of the second cover plate 142, or may be positioned in an area of the second cover plate 142 deviating from the center, as long as the liquid injection requirements for the electrode assembly 120 can be met. The secondary battery 100 further includes a sealing plate 150. The sealing plate 150 is disposed on one side of the second cover plate 142 away from the current collector 130, and the sealing plate 150 covers and seals the liquid injection hole 1421. Along the axial direction of the secondary battery 100, the second cover plate 142 is disposed between the first cover plate 141 and the current collector 130. An outer periphery of the second cover plate 142 contacts with an outer edge of the through hole 1411 facing the electrode assembly 120, so that the second cover plate 142 matches an inner wall of the through hole 1411 to form a stepped portion 180, as shown in FIG. 7. An outer periphery of the sealing plate 150 is accommodated within the stepped portion 180 and matches the stepped portion 180. The outer periphery of the sealing plate 150 is connected with the inner wall of the through hole 1411 to form a connecting seam 160 disposed circumferentially around the through hole 1411. A second weld mark 161 is formed at a position of the connecting seam 160. The sealing plate 150 is welded to the inner wall of the through hole 1411 through the second weld mark 161, so as to seal the liquid injection hole 1421. The stepped portion 180 may be formed through positional matching between the second cover plate 142 and the through hole 1411, thereby mounting the sealing plate 150 within the stepped portion 180, and allowing the sealing plate 150 to be disposed on the cover plate assembly 140 in a matched manner. Therefore, there is no need to integrally stamp and form the stepped portion 180 on the first cover plate 141 or the second cover plate 142. In this way, the forming precision of the stepped portion 180 may be improved, and then the matching precision between the sealing plate 150 and the stepped portion 180 may be improved, ultimately improving the welding quality of the sealing plate 150 and the stepped portion 180, and ensuring the sealing performance of the sealing plate 150 for the liquid injection hole 1421.

Further, please refer to FIG. 2 and FIG. 3, in an embodiment of the secondary battery 100 of the present disclosure, along the axial direction of the secondary battery 100, an orthogonal projection of the current collector 130 is at least partially positioned within a projection of the through hole 1411. A side surface of the second cover plate 142 facing the current collector 130 is at least partially welded with the current collector 130 underneath and forms a first weld mark 1422. The sealing plate 150 positioned on one side of the second cover plate 142 away from the electrode assembly 120 covers and seals the first weld mark 1422. With this arrangement, the sealing plate 150 may also cover and seal the first weld mark 1422 while sealing the liquid injection hole 1421, thereby reducing the probability of corrosion occurring at the first weld mark 1422, ensuring stability of electrical connection between the current collector 130 and the second cover plate 142.

Please refer to FIG. 3 to FIG. 5, in an embodiment of the secondary battery 100 of the present disclosure, the first cover plate 141 further includes a cover portion 1413 and a first protrusion 1412. The cover portion 1413 encloses an outer periphery of the first protrusion 1412. Along the axial direction of the secondary battery 100, the first protrusion 1412 protrudes toward the side where the second cover plate 142 is located relative to the cover portion 1413. The first protrusion 1412 may be positioned in the center area of the first cover plate 141, or may be positioned in an edge area of the first cover plate 141. Preferably, in the present embodiment, the first protrusion 1412 is positioned in the center area of the first cover plate 141, which makes it easy to perform positioning and processing of the first protrusion 1412 on the first cover plate 141. The through hole 1411 penetrates through the first protrusion 1412 along the axial direction of the secondary battery 100, and the through hole 1411 may be arranged coaxially with the first protrusion 1412, or may be arranged non-coaxially. Preferably, in the present embodiment, the through hole 1411 is arranged coaxially with the first protrusion 1412, which makes it easy to perform positioning and processing of the through hole 1411 on the first cover plate 141. One side of the first protrusion 1412 facing the electrode assembly 120 contacts and is welded with a surface of the second cover plate 142 on one side away from the electrode assembly 120. By setting the first protrusion 1412 and making an edge area of the first protrusion 1412 contact and weld with the second cover plate 142, it is possible to achieve local contact between the first cover plate 141 and the second cover plate 142, thus improving an effective contact area between the first cover plate 141 and the second cover plate 142 at an edge position of the through hole 1411. In this way, it is possible to improve the welding quality of the first cover plate 141 and the second cover plate 142 at that position.

Please refer to FIG. 3, in an embodiment of the secondary battery 100 of the present disclosure, along the axial direction of the secondary battery 100, one side of the first protrusion 1412 facing away from the electrode assembly 120 includes a first recess 14121. The first recess 14121 encloses an outer periphery of the through hole 1411. The second weld mark 161 formed by welding the outer periphery of the sealing plate 150 with the inner wall of the through hole 1411 is positioned within the first recess 14121, and the top of the second weld mark 161 does not extend beyond an outer surface of one side of the cover portion 1413 away from the electrode assembly 120. By setting the second weld mark 161 within the first recess 14121, it is possible to reduce a probability of the second weld mark 161 protruding from the outer surface of the cover portion 1413. In this way, not only that it is possible to ensure the flatness of an outer end surface of the cover plate assembly 140, facilitating welding of other electrical components on the end surface of the cover plate assembly 140, but also it is possible to better protect the second weld mark 161, thus reducing a probability of the second weld mark 161 being damaged by collision. In addition, since the first recess 14121 is disposed on one side of the first protrusion 1412 facing away from the electrode assembly 120, it is convenient to perform one-time stamping to form the first protrusion 1412 and the first recess 14121, thereby reducing the processing cost.

Please refer to FIG. 7 and FIG. 8, in an embodiment of the secondary battery 100 of the present disclosure, an outer edge of the first cover plate 141 includes a second protrusion 1415 matching the opening 112. The second protrusion 1415 encloses an outer periphery of the cover portion 1413. The second protrusion 1415 protrudes toward the side where the electrode assembly 120 is located. Along a radial direction of the secondary battery 100, a side wall of the second protrusion 1415 away from the cover portion 1413 is welded with an inner surface of the side wall 111. Along the axial direction of the secondary battery 100, a surface of the second protrusion 1415 facing the electrode assembly 120 side contacts and is welded with the current collector 130, forming a sixth weld mark 1416 as shown in FIG. 8, so as to achieve the electrical connection between the current collector 130 and the cover plate assembly 140. By setting the second protrusion 1415 and welding the second protrusion 1415 with the current collector 130, a welding position where the current collector 130 and the cover plate assembly 140 are welded may be positioned away from the liquid injection hole 1421 in the radial direction of the secondary battery 100. In this way, it is possible to reduce a probability of welding slag on a surface of the current collector 130 entering the interior of the electrode assembly 120 with the electrolyte during a liquid injection process, thereby ensuring normal circulation of the electrolyte within the interior of the electrode assembly 120.

Please refer to FIG. 3, in an embodiment of the secondary battery 100 of the present disclosure, along the axial direction of the secondary battery 100, at least a partial area of the current collector 130 is exposed from the through hole 1411. An area where the second cover plate 142 blocks the through hole 1411 is at least partially welded with the current collector 130 to form the first weld mark 1422 as shown in FIG. 3. A quantity and shape trajectory of the first weld mark 1422 are not limited herein, as long as it is ensured that the first weld mark 1422 is positioned within the through hole 1411 and a welding head may pass through for welding on one side of the second cover plate 142 facing away from the electrode assembly 120. By welding the second cover plate 142 with the current collector 130, optimization of a penetration welding process between the second cover plate 142 and the current collector 130 may be achieved by controlling a thickness of the second cover plate 142, thereby ensuring the quality of the first weld mark 1422 during the welding process while mitigating a probability of the current collector 130 being welded through. Meanwhile, since the second cover plate 142 and the first cover plate 141 are disposed separately, a change in the thickness of the second cover plate 142 will not affect the thickness of the first cover plate 141, thereby ensuring pressure resistance strength and support strength of the first cover plate 141.

Please refer to FIG. 9 to FIG. 11, in an embodiment of the secondary battery 100 of the present disclosure, along the axial direction of the secondary battery 100, the second cover plate 142 is disposed on one side of the first cover plate 141 facing away from the electrode assembly 120, and the second cover plate 142 at least partially blocks the through hole 1411. An outer edge of the second cover plate 142 contacts and is welded with a surface of the first cover plate 141 on one side facing away from the electrode assembly 120. It should be noted that in the present embodiment, one side of the second cover plate 142 facing the current collector 130 may be at least partially welded with the current collector 130 underneath. In other embodiments, one side of the second cover plate 142 facing the current collector 130 may also not be welded with the current collector 130 underneath. With this arrangement, welding operations may be performed on the first cover plate 141 and the second cover plate 142 on an outer side of the first cover plate 141, thereby reducing a probability of foreign matter such as welding slag generated in the welding area from entering the interior of the electrode assembly 120, which is more favorable for ensuring cleanliness of an internal environment of the electrode assembly 120. Meanwhile, when the center area of the second cover plate 142 is welded with the current collector 130 underneath, welding will also be performed on an outer side of the electrode assembly 120, which will also reduce a probability of foreign matter such as welding slag generated during the welding process at this position from entering the interior of the electrode assembly 120.

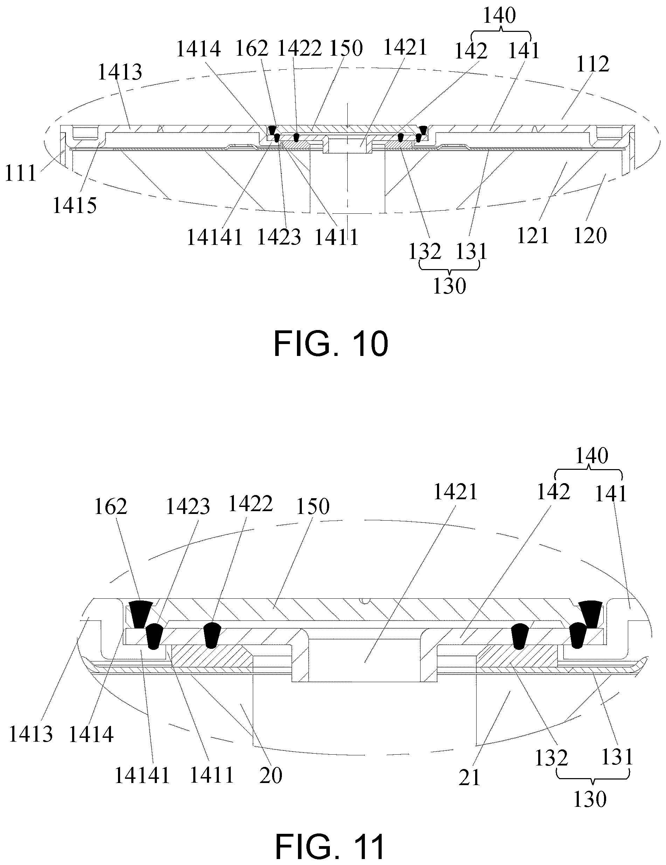

Further, please continue to refer to FIG. 9 to FIG. 11, in an embodiment of the secondary battery 100 of the present disclosure, along the axial direction of the secondary battery 100, on one side of the second cover plate 142 facing away from the electrode assembly 120, penetration welding is performed between the second cover plate 142 and the current collector 130 to form the first weld mark 1422. The first weld mark 1422 passes through the second cover plate 142 and enters the interior of the current collector 130 without extending beyond a surface of the current collector 130 facing the electrode assembly 120, that is, the first weld mark 1422 does not weld through the current collector 130, as shown in FIG. 11. On one side of the second cover plate 142 facing away from the electrode assembly 120, penetration welding is performed between the second cover plate 142 and the first cover plate 141 to form a third weld mark 1423. The third weld mark 1423 passes through the second cover plate 142 and enters the interior of the first cover plate 141 without extending beyond a surface of the first cover plate 141 facing the electrode assembly 120, that is, the third weld mark 1423 does not weld through the first cover plate 141, as shown in FIG. 11. With this arrangement, it is possible to better ensure that the first weld mark 1422 does not weld through the current collector 130, and the third weld mark 1423 does not weld through the first cover plate 141, thereby further reducing a probability of foreign matter such as welding slag, which is generated during the welding process for the second cover plate 142 and the current collector 130, and for the second cover plate 142 and the first cover plate 141, from entering the interior of the electrode assembly 120, thus better ensuring a service life of the secondary battery 100.

In order to reduce a mounting dimension occupied by the second cover plate 142 in the height direction of the secondary battery 100, please refer to FIG. 11, in an embodiment of the secondary battery 100 of the present disclosure, the first cover plate 141 includes a second recess 1414 and the cover portion 1413. The cover portion 1413 encloses an outer periphery of the second recess 1414, and the second recess 1414 is recessed toward the side where the electrode assembly 120 is located relative to the cover portion 1413. The second recess 1414 may be in various shapes such as a rectangular parallelepiped shape, a columnar shape, etc. For ease of positioning and molding, in this embodiment, the second recess 1414 has a columnar structure and is arranged coaxially relative to the cover portion 1413. The second recess 1414 includes a bottom wall 14141, and the through hole 1411 penetrates through the bottom wall 14141. The through hole 1411 may be disposed in a center area of the bottom wall 14141, or may be disposed in an edge area of the bottom wall 14141. Preferably, for ease of molding and processing of the through hole 1411 on the bottom wall 14141, in this embodiment, the through hole 1411 is disposed in the center area of the bottom wall 14141 and is arranged coaxially with the second recess 1414. The second cover plate 142 is accommodated in the second recess 1414. In a depth direction of the second recess 1414, the second cover plate 142 may be completely accommodated within the second recess 1414, or may be partially accommodated within the second recess 1414, which is not limited herein. The outer edge of the second cover plate 142 contacts and is welded with an outer edge of the bottom wall 14141 to form the third weld mark 1423. By providing the second recess 1414 and accommodating the second cover plate 142 within the second recess 1414, it is possible to reduce a height space occupied by the second cover plate 142 in the secondary battery 100 when the second cover plate 142 is mounted on the first cover plate 141, which helps to improve a volumetric energy density of the secondary battery 100.

Please continue to refer to FIG. 11, in order to further reduce the height dimension of the secondary battery 100, in an embodiment of the secondary battery 100 of the present disclosure, the sealing plate 150 is disposed on one side of the second cover plate 142 facing away from the electrode assembly 120, and is accommodated within the second recess 1414. An outer peripheral surface of the sealing plate 150 matches a side wall of the second recess 1414, an end surface of the sealing plate 150 facing one side of the electrode assembly 120 at least partially contacts and is welded with the second cover plate 142 to form a fifth weld mark 162. Along the axial direction of the secondary battery 100, the sealing plate 150 simultaneously blocks the first weld mark 1422 and the third weld mark 1423, thereby may reduce a probability of corrosion occurring at the first weld mark 1422 and the third weld mark 1423, thus ensuring stability of the welding quality. It should be noted that when the second cover plate 142 is provided with the liquid injection hole 1421, the sealing plate 150 may also seal the liquid injection hole 1421.

In the secondary battery, considering that the current collector 130 is mainly used for guiding current, the current collector 130 needs to have a good current guiding performance and a chemical corrosion resistance performance. In the meantime, the cover plate needs to be welded with the side wall 111 to form a portion of the housing 110 and therefore needs to have a high strength and a good rust prevention performance. In view of the foregoing, basically the current collector 130 and the cover plate do not adopt the same material. The current collector 130 generally adopts copper, nickel, aluminum and the like, while the cover plate generally adopts stainless steel material. Accordingly, there are problems such as high welding difficulty and difficulty in ensuring welding quality when welding the current collector 130 with the cover plate. Please refer to FIG. 3, in an embodiment of the secondary battery 100 of the present disclosure, a melting point of the second cover plate 142 is greater than the melting point of the current collector 130, and is less than the melting point of the first cover plate 141. By making the melting point of the second cover plate 142 greater than the melting point of the current collector 130, and less than the melting point of the first cover plate 141, such design sets the melting point of the second cover plate 142 to be between the melting points of the first cover plate 141 and the current collector 130, thereby reducing a melting point difference between the second cover plate 142 and the first cover plate 141, and ensuring the welding quality of the second cover plate 142 and the first cover plate 141. Also, it is possible to reduce a melting point difference between the second cover plate 142 and the current collector 130, thus ensuring the welding quality of the second cover plate 142 and the current collector 130, so it is possible to better solve the problems of high welding difficulty and difficulty in ensuring welding quality that are encountered when welding the current collector 130 and the cover plate.

Considering the characteristics of common materials adopted for the first cover plate 141 and the current collector 130, preferably, in an embodiment of the secondary battery 100 of the present disclosure, the material of the second cover plate 142 is selected from any one of nickel, carbon steel, iron, copper, copper-nickel alloy, or iron-nickel alloy. The above materials may not only allow the melting point of the second cover plate 142 to be between the melting points of the first cover plate 141 and the current collector 130, but also the above materials may ensure that the second cover plate 142 has a better electrical performance and a corrosion resistance performance.

In an embodiment of the secondary battery 100 of the present disclosure, the thickness of the second cover plate 142 is less than the thickness of the first cover plate 141. The thicknesses of the first cover plate 141 and the second cover plate 142 will affect the strength of the cover plate assembly 140 at different positions. As shown in FIG. 3, since the first cover plate 141 and the second cover plate 142 are disposed at different positions, the strength and rigidity requirements for the first cover plate 141 and the second cover plate 142 are also different. The first cover plate 141 is welded with the side wall 111 of the housing 110, and will be subjected to greater pressure when the secondary battery 100 is expanded and deformed, therefore the first cover plate 141 needs to have a greater supporting strength and rigidity to suppress the deformation of the secondary battery 100. Accordingly, the first cover plate 141 will also have a greater thickness correspondingly. Since the second cover plate 142 is positioned in the center area of the first cover plate 141, when the secondary battery 100 is expanded and deformed, the deformation is relatively small compared with the deformation encountered by the first cover plate 141. As such, the second cover plate 142 may be formed with a smaller thickness. Under the premise of ensuring that both the first cover plate 141 and the second cover plate 142 may satisfy their respective usage strength requirements, such setting may reduce the weight of the second cover plate 142, thereby facilitating the lightweight design of the secondary battery 100. In the meantime, since the second cover plate 142 is thinner, it is also more favorable for the second cover plate 142 to be welded through for welding with the current collector 130 underneath.

For facilitating the welding between the current collector 130 and the second cover plate 142, optionally, please refer to FIG. 3, in an embodiment of the secondary battery 100 of the present disclosure, along the axial direction of the secondary battery 100, the current collector 130 includes a current collector body 131 and a thickening portion 132 having a thickness greater than the that of current collector body 131. The current collector body 131 is electrically connected with the thickening portion 132, and the electrical connection method may be performed through welding or integral molding, which is not specifically limited herein. The current collector body 131 is welded with the first tab 121 underneath to achieve electrical connection with the electrode assembly 120. The thickening portion 132 protrudes toward the side where the second cover plate 142 is located relative to the current collector body 131, and contacts and is welded with the surface of the second cover plate 142 facing one side of the electrode assembly 120, so as to form the first weld mark 1422 between the second cover plate 142 and the current collector 130. The thickening portion 132 may be a truncated cone structure, or may be multiple protrusion structures and so on to satisfy the strength and current guiding requirements of for welding with the second cover plate 142. Through setting the thickening portion 132, on one hand, it is possible to facilitate effective fitting between the current collector 130 and the second cover plate 142, thereby ensuring the welding quality of the current collector 130 and the second cover plate 142. On the other hand, the setting of the thickening portion 132 may realize local thickening of the current collector 130. When performing laser penetration welding on the second cover plate 142 and the current collector 130 from outside the housing 110, it is possible to reduce welding difficulty, improve welding process window, prevent the current collector 130 from being welded through, and improve welding quality.

Furthermore, to further improve the welding quality of the second cover plate 142 and the current collector 130, as shown in FIG. 3, in an embodiment of the secondary battery 100 of the present disclosure, the thickness of the second cover plate 142 is less than a thickness of the thickening portion 132. With this setting, when performing laser penetration welding on the second cover plate 142 and the current collector 130 from outside the housing 110, since the second cover plate 142 is relatively thin, the welding power used for welding may be reduced, thereby saving energy and reducing carbon emission. Meanwhile, the reduction of welding power may also further reduce the probability of the current collector 130 underneath being welded through.

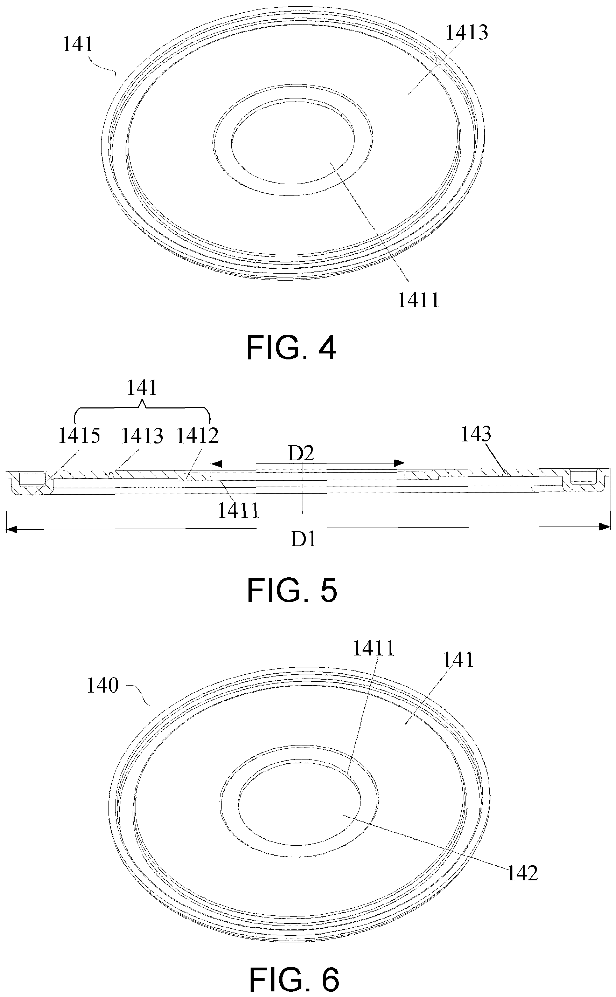

Please refer to FIG. 5, in an embodiment of the secondary battery 100 of the present disclosure, an outer diameter of the first cover plate 141 is D1, an inner diameter of the through hole 1411 is D2, a ratio of D2 to D1 is less than or equal to 0.5, i.e., D2/D1≤0.5, and the specific ratio of D2 to D1 may be 0.1, 0.3 or 0.5, etc. With this setting, it is possible to limit the area size of the through hole 1411 formed on the first cover plate 141, thereby ensuring that the first cover plate 141 has sufficient supporting strength and supporting rigidity to satisfy the usage requirements of the secondary battery 100.

Furthermore, based on the ratio of the inner diameter D2 of the through hole 1411 to the outer diameter D1 of the first cover plate 141 being less than or equal to 0.5, in a further embodiment of the secondary battery 100 of the present disclosure, the cover plate assembly 140 further includes an explosion-proof notch 143. The explosion-proof notch 143 is disposed on the first cover plate 141, as shown in FIG. 5 and FIG. 8. The explosion-proof notch 143 may be a continuous annular structure or a discontinuous structure. The position where the explosion-proof notch 143 is located is an area where the cover plate assembly 140 has a relatively low strength. When the gas pressure inside the secondary battery 100 is greater than a specific threshold, the explosion-proof notch 143 will be ruptured, and the gas pressure inside the secondary battery 100 is discharged from the rupture, thereby preventing the secondary battery 100 from experiencing lateral thermal runaway and avoiding serious consequences. Preferably, to facilitate the positioning and processing of the explosion-proof notch 143 on the first cover plate 141, in this embodiment, the explosion-proof notch 143 is an annular structure surrounding the outer periphery of the through hole 1411 and is disposed coaxially with the first cover plate 141.

Through setting the explosion-proof notch 143 on the first cover plate 141 under the condition that the ratio of the inner diameter D2 of the through hole 1411 to the outer diameter D1 of the first cover plate 141 is less than or equal to 0.5, on one hand, it is possible to reduce the dimensional limitation of the explosion-proof notch 143 in the radial direction of the cover plate assembly 140, so that the explosion-proof notch 143 may have a larger design dimension on the cover plate assembly 140, and a larger area of an explosion-proof valve may be opened around the cover plate assembly 140. In this way, the explosion-proof pressure relief capability of the secondary battery 100 may be improved, and the safety performance of the secondary battery 100 may be increased. On the other hand, since the ratio of the inner diameter D2 of the through hole 1411 to the outer diameter D1 of the first cover plate 141 is less than or equal to 0.5, it is possible to limit the area of the second cover plate 142 located at the through hole 1411. As such, since the internal pressure of the secondary battery 100 is fixed, the pressure on the second cover plate 142 will be correspondingly reduced, thereby reducing a pulling force on the third weld mark 1423 at the welding position between the first cover plate 141 and the second cover plate 142, and further reducing the damage to the connection strength of the first cover plate 141 and the second cover plate 142. In this way, it is possible to prevent the third weld mark 1423 from being torn before the explosion-proof notch 143 opens and prevent the second cover plate 142 from detaching as a whole and causing abnormal pressure relief problems. Also, the pressure on the second cover plate 142 may be better transmitted to the explosion-proof notch 143 on the outside, which is favorable for realizing the smooth rupture of the explosion-proof notch 143 and achieving the expected pressure relief and explosion-proof effect.

Please refer to FIG. 2 and FIG. 3, in an embodiment of the secondary battery 100 of the present disclosure, along the axial direction of the secondary battery 100, on the first tab 121 side of the electrode assembly 120, the current collector 130 contacts and is welded with the first tab 121, and a fourth weld mark 133 is formed accordingly. An orthogonal projection of the first cover plate 141 covers the fourth weld mark 133. The quantity and shape trajectory of the fourth weld mark 133 set on the current collector 130 are not limited herein, as long as the connection strength and current guiding requirements for the current collector 130 and the electrode assembly 120 may be satisfied. Through making the orthogonal projection of the first cover plate 141 cover the fourth weld mark 133, it is possible to further limit the area of the through hole 1411 disposed on the first cover plate 141, ensure that the first cover plate 141 has a sufficient supporting area, thereby further ensuring the supporting strength and rigidity of the first cover plate 141.

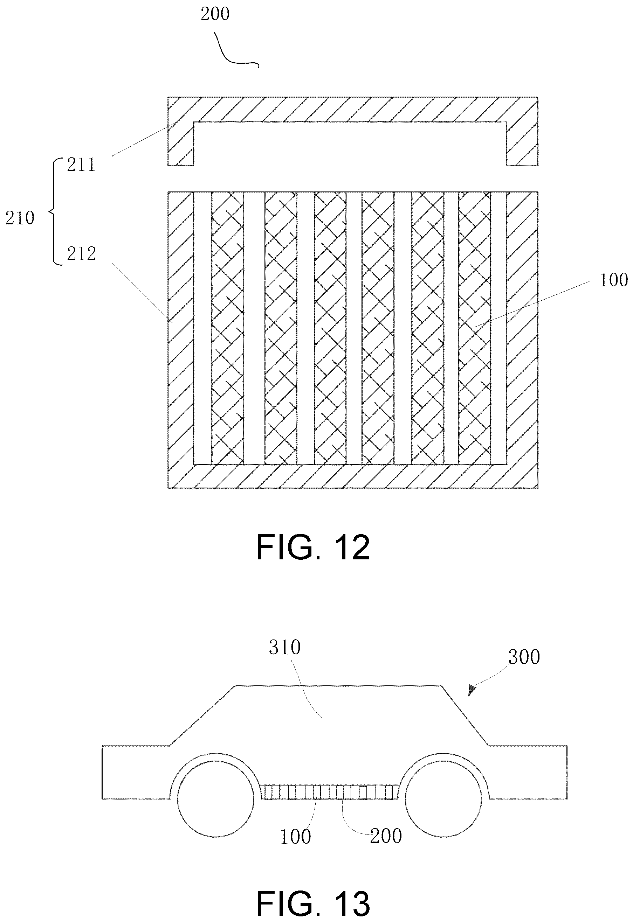

Please refer to FIG. 12, in an embodiment of the battery pack 200 of the present disclosure, the battery pack 200 includes a box body 210 and at least one secondary battery 100. The box body 210 includes a first box body portion 211 and a second box body portion 212. The first box body portion 211 and the second box body portion 212 cover each other to form an accommodating space. A plurality of secondary batteries 100 are accommodated in the accommodating space, and the plurality of secondary batteries 100 may be connected in series and/or in parallel. The battery pack 200 may be, for example, a battery module, a battery pack, etc.

Please refer to FIG. 13, in an embodiment of the electronic device 300 of the present disclosure, the electronic device 300 includes an operation portion 310 and the battery pack 200. The operation portion 310 is electrically connected with the battery pack 200 to obtain electrical energy support. The operation portion 310 may be a unit component capable of obtaining electrical energy from the battery pack 200 and performing corresponding operations, such as a fan blade rotation unit of a fan, a dust suction operation unit of a vacuum cleaner, a wheel drive unit in an electric vehicle, etc. The electronic device 300 may be a vehicle, a mobile phone, a portable device, a laptop computer, a ship, a spacecraft, an electric toy, an electric tool, etc. The vehicle may be a fuel vehicle, a gas vehicle, or a new energy vehicle, the new energy vehicle may be a pure electric vehicle, a hybrid vehicle, or a range-extended vehicle, etc. The spacecraft includes aircraft, rockets, space shuttles, spaceships, etc. The electric toy includes fixed or mobile electric toys, such as game machines, electric vehicle toys, electric ship toys, electric aircraft toys, etc. The electric tool includes metal cutting electric tools, grinding electric tools, assembly electric tools, and railway electric tools, such as electric drills, electric grinders, electric wrenches, electric screwdrivers, electric hammers, impact drills, concrete vibrators, electric planers, etc. The embodiments of the present disclosure do not impose special restrictions on the above electronic device 300. In an embodiment of the electronic device 300 of the present disclosure, the electronic device 300 is a vehicle, the operation portion 310 is a vehicle body of the vehicle. The battery pack 200 is fixed on the vehicle body, thereby providing a driving force for the vehicle, and achieving operation of the vehicle.

In the secondary battery, the battery pack and the electronic device provided in the present disclosure, the cover plate assembly of the secondary battery includes the first cover plate and the second cover plate disposed separately. The first cover plate and the second cover plate may each be individually formed and then fixed together. Compared with the integrated end cap, the design of the present disclosure may achieve an optimized layout of multiple local feature structures on the cover plate assembly by adjusting a connection positional relationship between the first cover plate and the second cover plate, thereby making it easy to form local features. Also, since the first cover plate and the second cover plate are disposed as separate structures, the first cover plate and the second cover plate may also adopt different materials or have different material thicknesses according to actual welding requirements and strength requirements. Therefore, compared with the integrated end cap, the separate design of the cover plate assembly in the present disclosure has a better flexibility and is easier to achieve structural optimization of the secondary battery on the end cap side. Therefore, the present disclosure effectively overcomes some practical problems in the related art and thus possesses high utility value and practical significance.

## Claims

1. A secondary battery (100), comprising:
a housing (110), comprising a side wall (111) with an opening (112) at one end and a cover plate assembly (140), wherein the cover plate assembly (140) seals the opening (112);
an electrode assembly (120), disposed within the housing (110);
wherein the secondary battery (100) is **characterized in that** the cover plate assembly (140) comprises:
a first cover plate (141), covering the opening (112) and connected with the side wall (111) in a sealed manner, the first cover plate (141) comprising a through hole (1411);
a second cover plate (142), at least partially blocking the through hole (1411), the second cover plate (142) being connected with the first cover plate (141).

2. The secondary battery (100) according to claim 1, wherein the second cover plate (142) comprises a liquid injection hole (1421), the second cover plate (142) is disposed between the first cover plate (141) and the electrode assembly (120), and the second cover plate (142) and an inner wall of the through hole (1411) are matched to form a stepped portion (180), the cover plate assembly (140) further comprises a sealing plate (150), an outer periphery of the sealing plate (150) matches the stepped portion (180) and is welded with the inner wall of the through hole (1411) to seal the liquid injection hole (1421).

3. The secondary battery (100) according to claim 2, wherein the secondary battery (100) further comprises a current collector (130) electrically connected with the electrode assembly (120), the current collector (130) is disposed between the electrode assembly (120) and the second cover plate (142), and is welded with the second cover plate (142) to form a first weld mark (1422), the sealing plate (150) covers and seals the first weld mark (1422).

4. The secondary battery (100) according to claim 2, wherein the first cover plate (141) further comprises a first protrusion (1412) and a cover portion (1413) surrounding an outer periphery of the first protrusion (1412), the first protrusion (1412) protrudes toward a side where the second cover plate (142) is located relative to the cover portion (1413), the through hole (1411) penetrates through the first protrusion (1412), and one side of the first protrusion (1412) facing the electrode assembly (120) is welded with the second cover plate (142).

5. The secondary battery (100) according to claim 4, wherein one side of the first protrusion (1412) facing away from the electrode assembly (120) comprises a first recess (14121), the sealing plate (150) is welded with the inner wall of the through hole (1411) to form a second weld mark (161), the second weld mark (161) is accommodated within the first recess (14121), and a top of the second weld mark (161) does not extend beyond an outer surface of the cover portion (1413) facing away from the electrode assembly (120).

6. The secondary battery (100) according to claim 1, wherein the secondary battery (100) further comprises a current collector (130), the current collector (130) is disposed on one side of the electrode assembly (120) facing the cover plate assembly (140) and is electrically connected with the electrode assembly (120), an outer periphery of the first cover plate (141) is welded with the side wall (111), at least a partial area of the current collector (130) is exposed from the through hole (1411), an area where the second cover plate (142) blocks the through hole (1411) is at least partially welded with the current collector (130).

7. The secondary battery (100) according to claim 6, wherein the second cover plate (142) is disposed on one side of the first cover plate (141) facing away from the electrode assembly (120), an outer edge of the second cover plate (142) contacts and is welded with the first cover plate (141).

8. The secondary battery (100) according to claim 7, wherein the second cover plate (142) is welded with the current collector (130) to form a first weld mark (1422), the first weld mark (1422) passes through the second cover plate (142) and enters an interior of the current collector (130) without extending beyond a surface of the current collector (130) facing the electrode assembly (120), the second cover plate (142) is welded with the first cover plate (141) to form a third weld mark (1423), the third weld mark (1423) passes through the second cover plate (142) and enters an interior of the first cover plate (141) without extending beyond a surface of the first cover plate (141) facing the electrode assembly (120).

9. The secondary battery (100) according to claim 7, wherein the first cover plate (141) comprises a second recess (1414) and a cover portion (1413) surrounding an outer periphery of the second recess (1414), the second recess (1414) is recessed toward a side where the electrode assembly (120) is located relative to the cover portion (1413), the second recess (1414) comprises a bottom wall (14141), the through hole (1411) penetrates through the bottom wall (14141), the second cover plate (142) is accommodated in the second recess (1414) and is welded with the bottom wall (14141).

10. The secondary battery (100) according to any one of claims 6-9, wherein a melting point of the second cover plate (142) is greater than a melting point of the current collector (130) and is less than a melting point of the first cover plate (141); and/or
a material of the second cover plate (142) is one of nickel, carbon steel, iron, copper, copper-nickel alloy, or iron-nickel alloy; and/or
a thickness of the second cover plate (142) is less than a thickness of the first cover plate (141).

11. The secondary battery (100) according to any one of claims 6-9, wherein along an axial direction of the secondary battery (100), the current collector (130) comprises a current collector body (131) and a thickening portion (132) having a thickness greater than that of the current collector body (131), the thickening portion (132) protrudes toward a side where the second cover plate (142) is located relative to the current collector body (131) and contacts and is welded with the second cover plate (142).

12. The secondary battery (100) according to claim 11, wherein a thickness of the second cover plate (142) is less than a thickness of the thickening portion (132).

13. The secondary battery (100) according to claim 1, wherein a ratio of an inner diameter of the through hole (1411) to an outer diameter of the first cover plate (141) is less than or equal to 0.5.

14. The secondary battery (100) according to claim 13, wherein the secondary battery (100) further comprises a current collector (130), the current collector (130) is disposed on one side of the electrode assembly (120) facing the cover plate assembly (140) and is electrically connected with the electrode assembly (120) to form a fourth weld mark (133), along an axial direction of the secondary battery (100), an orthogonal projection of the first cover plate (141) at least partially covers the fourth weld mark (133), wherein the cover plate assembly (140) further comprises an explosion-proof notch (143), the explosion-proof notch (143) is disposed on the first cover plate (141).

15. A battery pack (200), comprising the secondary battery (100) according to any one of claims 1-14.
